# EUROPEAN PATENT APPLICATION

(11) **EP 2 403 250 A1**
(43) Date of publication of application: **04.01.2012**
(21) Application number: 11171045.5
(22) Date of filing: 22.06.2011
(51) Int. Cl.: H04N 7/26

(54) **Method and apparatus for multi-standard video coding**

(30) Priority: 30.06.2010 US 828015
(71) Applicant: ViXS Systems Inc., Toronto, ON M2K 1E3 (CA)
(72) Inventor: Zhao, Xu, Toronto, Ontario M8V 3W9 (CA); Wang, Limin, Richmond Hill, Ontario L4E 4N5 (CA)
(74) Representative: Benson, Christopher

(57) **Abstract**

A video encoder (102, 402) includes a non-syntax processing engine (150) that processes a video input signal (110) into an intermediate signal (111) in accordance with a first video compression standard. A syntax section (175) transforms and quantizes the intermediate signal (111) in accordance with a second video compression standard to produce a processed video signal (112), wherein the second video compression standard is different from the first video compression standard.

## Description

### CROSS REFERENCE TO RELATED PATENTS

The present application is relate to U.S. Application No. _______ entitled, VIDEO ENCODER WITH VIDEO DECODER REUSE AND METHOD FOR USE THEREWITH, filed on June 30,2010.

### TECHNICAL FIELD OF THE INVENTION

The present invention relates to encoding used in devices such as video encoders/decoders.

### DESCRIPTION OF RELATED ART

Video encoding has become an important issue for modern video processing devices. Robust encoding algorithms allow video signals to be transmitted with reduced bandwidth and stored in less memory. However, the accuracy of these encoding methods face the scrutiny of users that are becoming accustomed to greater resolution and higher picture quality. Standards have been promulgated for many encoding methods including the H.264 standard that is also referred to as MPEG-4, part 10 or Advanced Video Coding, (AVC) and VC-1 set forth by the society of motion picture and television engineers (SMPTE). While this standard sets forth many powerful techniques, further improvements are possible to improve the performance and speed of implementation of such methods. The video signal encoded by these encoding methods must be similarly decoded for playback on most video display devices.

Efficient and fast encoding and decoding of video signals is important to the implementation of many video devices, particularly video devices that are destined for home use. Encoding methods are updated from time to time to improve their performance. In many cases, updates to an encoding method include new functions and features that require design changes and more complicated implementations.

Further limitations and disadvantages of conventional and traditional approaches will become apparent to one of ordinary skill in the art through comparison of such systems with the present invention.

### BRIEF DESCRIPTION OF THE SEVERAL VIEWS OF THE DRAWINGS

FIGs. 1-3 present pictorial diagram representations of various video devices in accordance with embodiments of the present invention.
FIG. 4 presents a block diagram representation of a video device in accordance with an embodiment of the present invention.
FIG. 5 presents a block diagram representation of a video distribution system 375 in accordance with an embodiment of the present invention.
FIG. 6 presents a block diagram representation of a video storage system 179 in accordance with an embodiment of the present invention.
FIG. 7 presents a block diagram representation of a video encoder 102 in accordance with an embodiment of the present invention.
FIG. 8 presents a block diagram representation of a video encoder 102 in accordance with an embodiment of the present invention.
FIG. 9 presents a block flow diagram of a video encoding operation in accordance with an embodiment of the present invention.
FIG. 10 presents a block diagram representation of a video encoder 402 in accordance with an embodiment of the present invention.
FIG. 11 presents a block diagram representation of a video encoder 402 in accordance with an embodiment of the present invention.
FIG. 12 presents a flowchart representation of a method in accordance with an embodiment of the present invention.
FIG. 13 presents a flowchart representation of a method in accordance with an embodiment of the present invention.

### DETAILED DESCRIPTION OF THE INVENTION INCLUDING THE PRESENTLY

### PREFERRED EMBODIMENTS

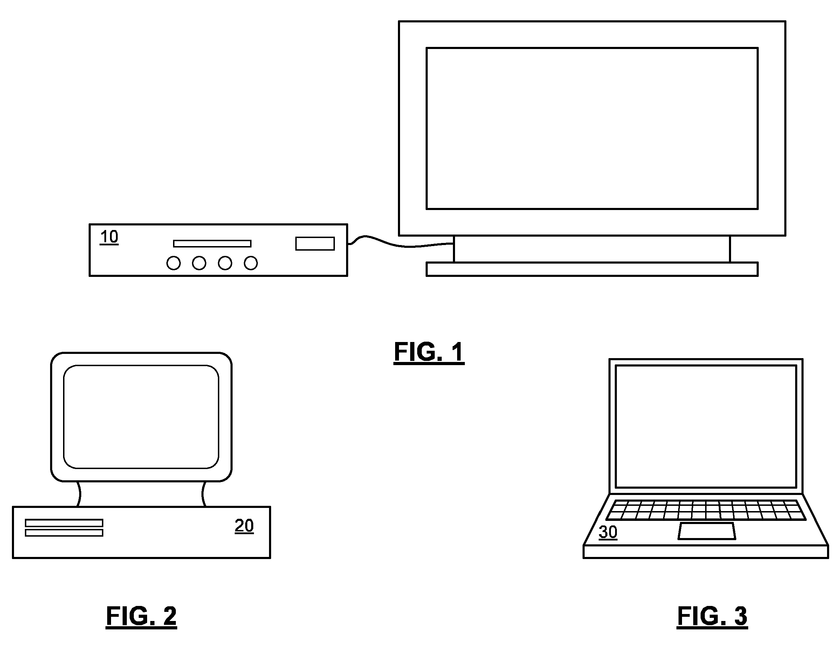

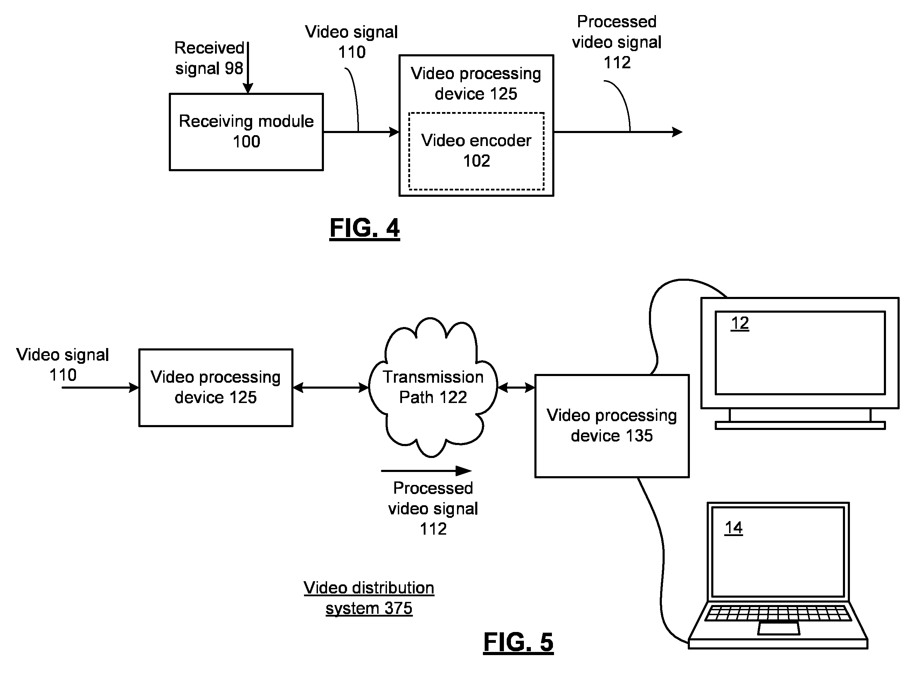

FIGs. 1-3 present pictorial diagram representations of various video devices in accordance with embodiments of the present invention. In particular, set top box 10 with built-in digital video recorder functionality or a stand alone digital video recorder, video server 20 and portable computer 30 illustrate electronic devices that incorporate a video device 125 that includes one or more features or functions of the present invention. While these particular devices are illustrated, video processing device 125 includes any device that is capable of encoding and/or transcoding video content in accordance with the methods and systems described in conjunction with FIGs. 4-13 and the appended claims.

FIG. 4 presents a block diagram representation of a video device in accordance with an embodiment of the present invention. In particular, this video device includes a receiving module 100, such as a television receiver, cable television receiver, satellite broadcast receiver, broadband modem, 3G transceiver or other information receiver or transceiver that is capable of receiving a received signal 98 and extracting one or more video signals 110 via time division demultiplexing, frequency division demultiplexing or other demultiplexing technique. Video processing device 125 includes video encoder 102 and is coupled to the receiving module 100 to encode or transcode the video signal into processed video signal 112 for transmission or storage.

In an embodiment of the present invention, the received signal 98 is a broadcast video signal, such as a television signal, high definition television signal, enhanced definition television signal or other broadcast video signal that has been transmitted over a wireless medium, either directly or through one or more satellites or other relay stations or through a cable network, optical network or other transmission network. In addition, received signal 98 can be generated from a stored video file, played back from a recording medium such as a magnetic tape, magnetic disk or optical disk, and can include a streaming video signal that is transmitted over a public or private network such as a local area network, wide area network, metropolitan area network or the Internet.

Video signal 110 can include an analog video signal that is formatted in any of a number of video formats including National Television Systems Committee (NTSC), Phase Alternating Line (PAL) or *Sequentiel Couleur Avec Memoire* (SECAM). Processed video signal 112 can include a digital video signal complying with a digital video codec standard such as H.26x, MPEG-4 Part 10 Advanced Video Coding (AVC) or another digital format such as a Motion Picture Experts Group (MPEG) format (such as MPEG1, MPEG2 or MPEG4), Quicktime format, Real Media format, Windows Media Video (WMV) or Audio Video Interleave (AVI), etc. In other examples, the video signal 110 can itself be an uncompressed digital video signal that is encoded into a compressed digital video format or a compressed digital video signal that is transcoded into a different compressed digital video format.

FIG. 5 presents a block diagram representation of a video distribution system 375 in accordance with an embodiment of the present invention. In particular, processed video signal 112 is generated by a video processing device 125 for transmission via a transmission path 122 to a video processing device 135. The video processing device 135 operates to decode the processed video signal 112 for display on a display device such as television 12, computer 14 or other display device.

The transmission path 122 can include a wireless path that operates in accordance with a wireless local area network protocol such as an 802.11 protocol, a WIMAX protocol, a Bluetooth protocol, etc. Further, the transmission path can include a wired path that operates in accordance with a wired protocol such as a Universal Serial Bus protocol, an Ethernet protocol or other high speed protocol.

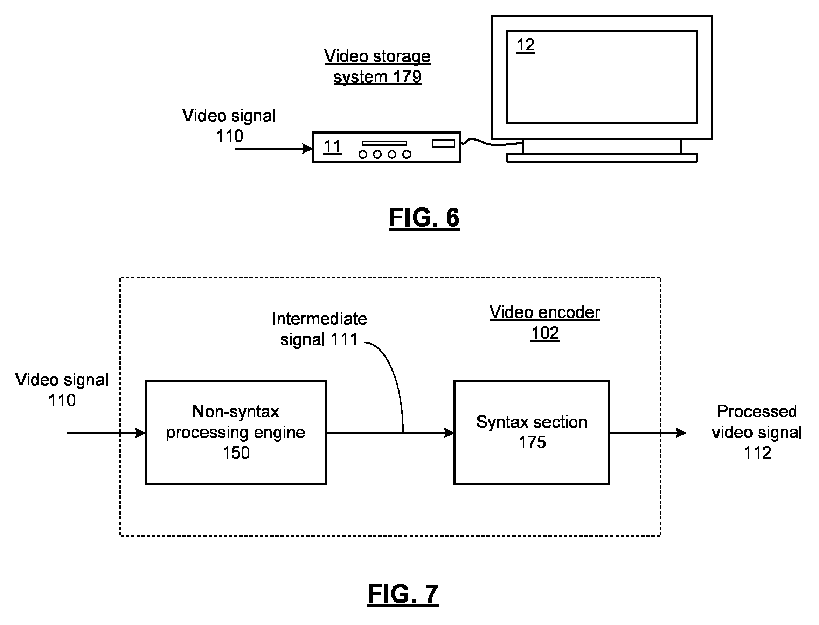

FIG. 6 presents a block diagram representation of a video storage system 179 in accordance with an embodiment of the present invention. In particular, device 11 is a set top box with built-in digital video recorder functionality, a stand alone digital video recorder, a DVD recorder/player or other device that includes a video encoder, such as video encoder 102. In operation, the device 11 receives the video signal 110 and generates the processed video signal 112 for storage in memory, a hard drive, etc. as a compressed digital video file. In this example, a user can command device 11 to retrieve and decode the compressed video file for playback on a video display device such as television 12. While these particular devices are illustrated, video storage system 179 can include a hard drive, flash memory device, computer, DVD burner, or any other device that is capable of generating, storing, decoding and/or displaying the video content of processed video signal 112 in accordance with the methods and systems described in conjunction with the features and functions of the present invention as described herein.

FIG. 7 presents a block diagram representation of a video encoder 102 in accordance with an embodiment of the present invention. In particular, video encoder 102 includes a non-syntax processing engine 150 that processes a video input signal, such as video signal 110 into an intermediate signal 111 in accordance with a first video compression standard. The non-syntax processing engine 150 can include motion search, motion refinement, and inter-mode decision portions, etc. For example, the first video processing standard can be H.26x, MPEG-4 Part 10 Advanced Video Coding (AVC), VC-1 or another digital format. The intermediate signals 111 can include a plurality of motion vectors and a mode decision or other intermediate signals that are generated in the video encoding process. While the intermediate signals 111 are generated in accordance with a particular standard, the intermediate results, in the form of motion vectors and/or mode decisions, can be compatible with other standards, and thus be independent of the particular compressed digital video format used to generate the intermediate signals 111.

Video encoder 102 further includes a syntax section 175 that processes the intermediate signals 111 in accordance with a second video compression standard to produce the processed video signal 112. For example, the syntax section 175 can calculate motion vector differences such as residual pixel chroma and luma values, transform and quantize the residual pixel values into transformed and quantized data that can be reordered and entropy coded into a bitstream that is output as processed video signal 112. As discussed above, the intermediate signals 111 can be compatible with other standards, and thus be independent of the particular compressed digital video format used to generate the intermediate signals 111. The format of processed video signal 112 is, however, dependent on the syntax of the second video compression standard.

In operation, the second video compression standard can be different from the first video compression standard. For example, a VC-1 video encoder can be constructed using a non-syntax processing engine 150 used as part of a H.264 encoder. The motion vectors and mode decision generated by the non-syntax processing engine 150 can be processed in by syntax section 175 to generate the processed video signal in VC-1 format. In this fashion, a new VC-1 video encoder can be constructed from legacy H.264 encoding hardware with the addition of only a new syntax section 175. This implementation can save development time in the implementation of a new standard.

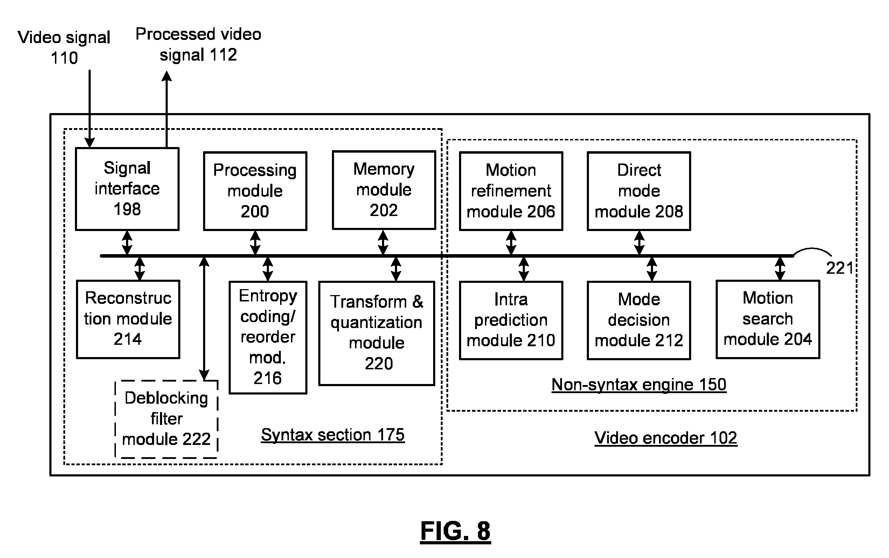

FIG. 8 presents a block diagram representation of a video encoder 102 in accordance with an embodiment of the present invention. In particular, video encoder 102 can be a video codec that operates in accordance with many of the functions and features of the H.264 standard, the MPEG-4 standard, VC-1 (SMPTE standard 421M) or other standard, to process processed video signal 112 to encode or transcode video signal 110. Video signal 110 is optionally formatted by signal interface 198 for encoding or transcoding.

Processing module 200, and memory module 202 are coupled, via bus 221, to the signal interface 198 and a plurality of other modules, such as motion search module 204, motion refinement module 206, direct mode module 208, intra-prediction module 210, mode decision module 212, reconstruction module 214, entropy coding/reorder module 216, forward transform and quantization module 220 and optional deblocking filter module 222. As shown, non-syntax engine 150 includes motion search module 204, motion refinement module 206, direct mode module 208, intra-prediction module 210, and mode decision module 212. Syntax section 175 include reconstruction module 214, entropy coding/reorder module 216, forward transform and quantization module 220 and optional deblocking filter module 222, as well as processing module 200, memory module 202 and signal interface 198. While particular modules are shown as being included in either non-syntax engine 150 or syntax section 175, it should be noted the make-up of non-syntax engine 150 or syntax section 175 can be different, depending on the format of intermediate signals 111 and/or the particular standard-dependent portions of a particular digital video format being implemented by video encoder 102. Further, while a particular bus architecture is shown, alternative architectures using direct connectivity between one or more modules and/or additional busses can likewise be implemented in accordance with the present invention.

In a particular embodiment of the present invention, non-syntax engine 150 is implemented in hardware using a single application specific integrated circuit, state machine, logic circuitry, analog circuitry, digital circuitry, and/or any other hardware device that generates intermediate signals 111 from video signal 110. Syntax section 175 can be implemented via processing module 200 that can include a single processing device or a plurality of processing devices. Such a processing device may be a microprocessor, co-processors, a micro-controller, digital signal processor, microcomputer, central processing unit, field programmable gate array, programmable logic device, and/or any device that manipulates signals (analog and/or digital) based on operational instructions that are stored in a memory, such as memory module 202. Memory module 202 can include a single memory device or a plurality of memory devices. Such a memory device can include a hard disk drive or other disk drive, read-only memory, random access memory, volatile memory, non-volatile memory, static memory, dynamic memory, flash memory, cache memory, and/or any device that stores digital information. In other embodiments however, non-syntax engine 150 and syntax section 175 can be implemented in other combinations of hardware, firmware or software.

The format of video signal 110 and the format of processed video signal 112 can be determined by a standard selection signal that also may be a user defined parameter, user input, register value, memory value or other signal.

In one example of operation, the non-syntax engine 150 operates in accordance with H.264/AVC. Motion search module 204 processes pictures from the video signal 110 based on a segmentation into macroblocks of pixel values, such as of 16 pixels by 16 pixels size, from the columns and rows of a frame and/or field of the video signal 110. In an embodiment of the present invention, the motion search module determines, for each macroblock or macroblock pair of a field and/or frame of the video signal one or more motion vectors that represents the displacement of the macroblock (or subblock) from a reference frame or reference field of the video signal to a current frame or field. The motion search module 204 operates within a search range to locate a macroblock (or subblock) in the current frame or field to an integer pixel level accuracy such as to a resolution of 1-pixel. Candidate locations are evaluated based on a cost formulation to determine the location and corresponding motion vector that have a most favorable (such as lowest) cost.

In an embodiment of the present invention, a cost formulation is based on the Sum of Absolute Difference (SAD) between the reference macroblock and candidate macroblock pixel values and a weighted rate term that represents the number of bits required to be spent on coding the difference between the candidate motion vector and either a predicted motion vector (PMV) that is based on the neighboring macroblock to the right of the current macroblock and on motion vectors from neighboring current macroblocks of a prior row of the video input signal or an estimated predicted motion vector that is determined based on motion vectors from neighboring current macroblocks of a prior row of the video input signal. In an embodiment of the present invention, the cost calculation avoids the use of neighboring subblocks within the current macroblock. In this fashion, motion search module 204 is able to operate on a macroblock to contemporaneously determine the motion search motion vector for each subblock of the macroblock.

A motion refinement module 206 generates a refined motion vector for each macroblock of the plurality of macroblocks, based on the motion search motion vector. In an embodiment of the present invention, the motion refinement module determines, for each macroblock or macroblock pair of a field and/or frame of the video signal 110, a refined motion vector that represents the displacement of the macroblock from a reference frame or reference field of the video signal to a current frame or field.

Based on the pixels and interpolated pixels, the motion refinement module 206 refines the location of the macroblock in the current frame or field to a greater pixel level accuracy such as to a resolution of 1/4-pixel or other sub-pixel resolution. Candidate locations are also evaluated based on a cost formulation to determine the location and refined motion vector that have a most favorable (such as lowest) cost.

A direct mode module 208 generates a direct mode motion vector for each macroblock, based on macroblocks that neighbor the macroblock. In an embodiment of the present invention, the direct mode module 208 operates to determine the direct mode motion vector and the cost associated with the direct mode motion vector based on the cost for candidate direct mode motion vectors for the B slices of video signal 110, such as in a fashion defined by the H.264 standard.

While the prior modules have focused on inter-prediction of the motion vector, intra-prediction module 210 generates a best intra prediction mode for each macroblock of the plurality of macroblocks. In an embodiment of the present invention, intra-prediction module 210 operates as defined by the H.264 standard, however, other intra-prediction techniques can likewise be employed. In particular, intra-prediction module 210 operates to evaluate a plurality of intra prediction modes such as a Intra-4x4 or Intra-16x16, which are luma prediction modes, chroma prediction (8x8) or other intra coding, based on motion vectors determined from neighboring macroblocks to determine the best intra prediction mode and the associated cost.

Mode decision module 212 determines a final macroblock cost for each macroblock of the plurality of macroblocks based on costs associated with the refined motion vector, the direct mode motion vector, and the best intra prediction mode, and in particular, the method that yields the most favorable (lowest) cost, or an otherwise acceptable cost. Reconstruction module 214 completes the motion compensation by generating residual luma and/or chroma pixel values for each macroblock of the plurality of macroblocks, based on the mode decision and the final motion vectors determined by non-syntax engine 150.

A forward transform and quantization module 220 generates processed video signal 112 by transforming coding and quantizing the residual pixel values into quantized transformed coefficients that can be further coded, such as by entropy coding in entropy coding module 216. In an embodiment of the present invention, further formatting and/or buffering can optionally be performed by signal interface 198 and the processed video signal 112 can be represented as being output therefrom.

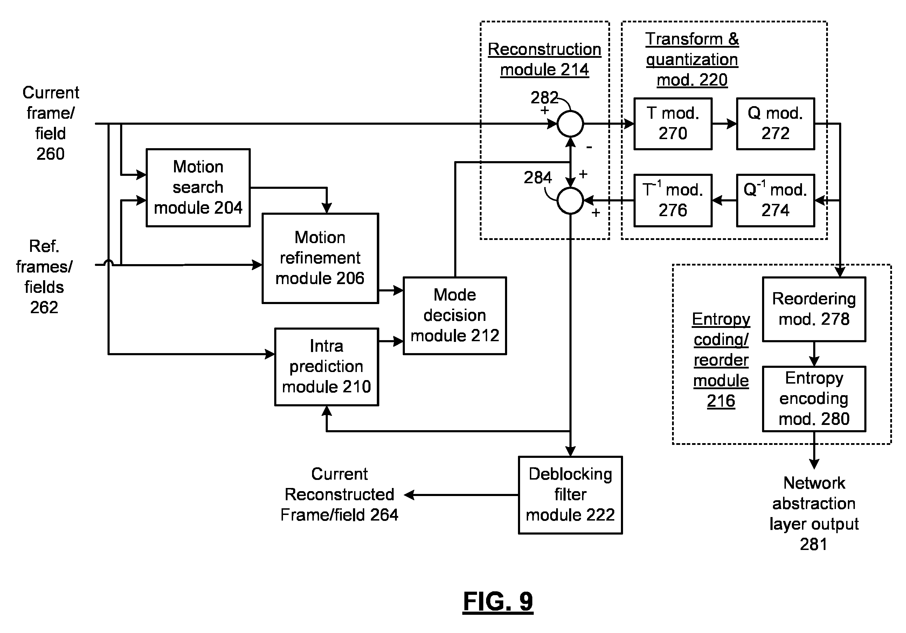

FIG. 9 presents a block flow diagram of a video encoding operation in accordance with an embodiment of the present invention. In particular, an example video encoding operation is shown that uses many of the function specific modules described in conjunction with FIG. 8 to implement a similar encoding operation. Motion search module 204 generates a motion search motion vector for each macroblock of a plurality of macroblocks based on a current frame/field 260 and one or more reference frames/fields 262. Motion refinement module 206 generates a refined motion vector for each macroblock of the plurality of macroblocks, based on the motion search motion vector. Intra-prediction module 210 evaluates and chooses a best intra prediction mode for each macroblock of the plurality of macroblocks. Mode decision module 212 determines a final motion vector for each macroblock of the plurality of macroblocks based on costs associated with the refined motion vector, and the best intra prediction mode.

Reconstruction module 214 generates residual pixel values corresponding to the final motion vector for each macroblock of the plurality of macroblocks by subtraction from the pixel values of the current frame/field 260 by difference circuit 282 and generates unfiltered reconstructed frames/fields by re-adding residual pixel values (processed through transform and quantization module 220) using adding circuit 284. The transform and quantization module 220 transforms and quantizes the residual pixel values in transform module 270 and quantization module 272 and re-forms residual pixel values by inverse transforming and dequantization in inverse transform module 276 and dequantization module 274. In addition, the quantized and transformed residual pixel values are reordered by reordering module 278, such as by zig-zag scanning and entropy encoded by entropy encoding module 280 of entropy coding/reordering module 216 to form network abstraction layer output 281, in the particular format of the selected digital video format.

Deblocking filter module 222 forms the current reconstructed frames/fields 264 from the unfiltered reconstructed frames/fields. It should also be noted that current reconstructed frames/fields 264 can be buffered to generate reference frames/fields 262 for future current frames/fields 260.

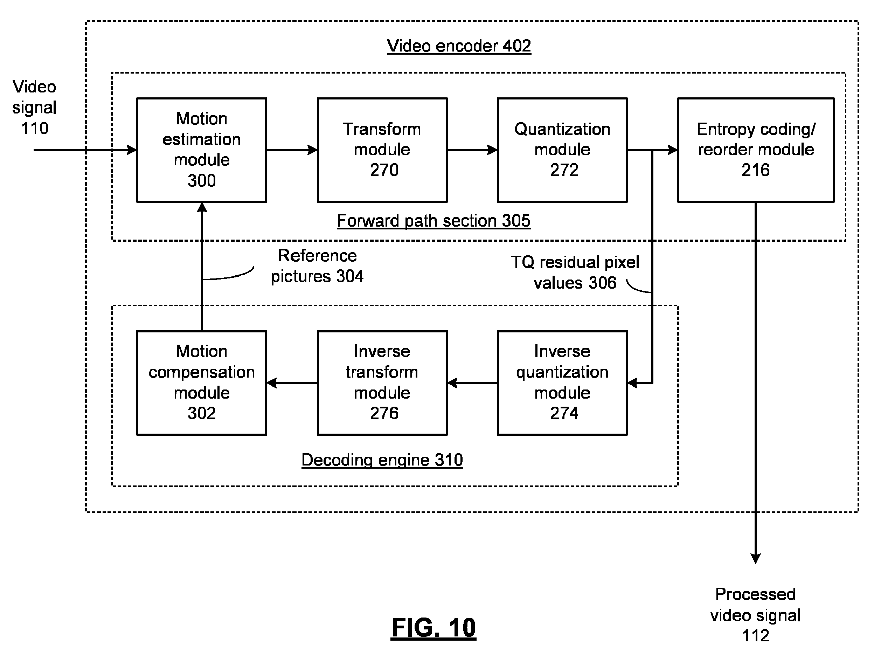

FIG. 10 presents a block diagram representation of a video encoder 402 in accordance with an embodiment of the present invention. In particular, video encoder 402 performs the functions of video encoder 102 to generated processed video signal 112 from video signal 110. In particular, video encoder 102 includes a forward path section 305 that processes a video input signal in accordance with a video compression standard, based on a plurality of reference pictures 304, to generate processed video signal 112 and a plurality of transformed quantized (TQ) residual pixel values 306. The compression standard can be VC-1, H.264 or other digital video format. In particular, the forward path section 305 can be implemented via the forward path portions of non-syntax engine 150 and syntax section 175 or the forward path portions of a conventional video encoder.

Video encoder 402 further includes a decoding engine 310 that decodes the plurality of transformed quantized residual pixel values 306 in accordance with the video compression standard to generate the plurality of reference pictures 304. As shown, the decoding engine 310 includes an inverse transformation module 274 and an inverse quantization module 276, to generate reconstructed residual pixel values from the TQ residual pixel values 306. Motion compensation module 302 generates the reference pictures 304 from the reconstructed residual pixel values.

It should be noted that an existing video decoder can be used to implement the decoding engine 310 in the reconstruction path. In this fashion, a new video encoder can be constructed from an existing video decoder, by simply constructing the forward path section 305. For example, the decoding engine 310 can be implemented in hardware while the forward path section 305 can be implemented partially or fully in software or firmware running on a processor.

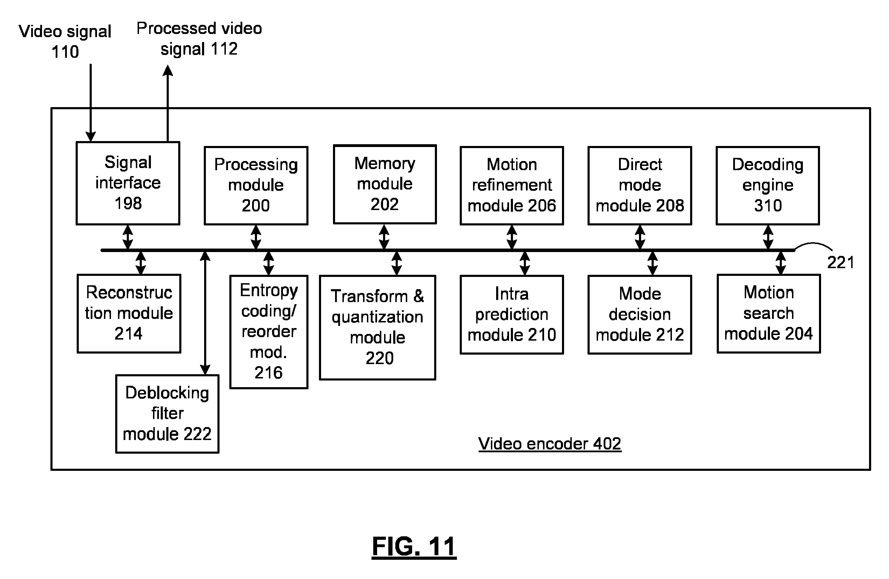

FIG. 11 presents a block diagram representation of a video encoder 402 in accordance with an embodiment of the present invention. In particular, the video encoder 402 shares many similar elements with video encoder 102 that are referred to by common reference numerals. Motion estimation module 300 can be implemented via motion search module 204, motion refinement module 206, direct mode module 208, intra-prediction module 210 and mode decision module 212, and a forward path portion of reconstruction module 214. The reconstruction path of video encoder 402 can be implemented via decoding engine 310.

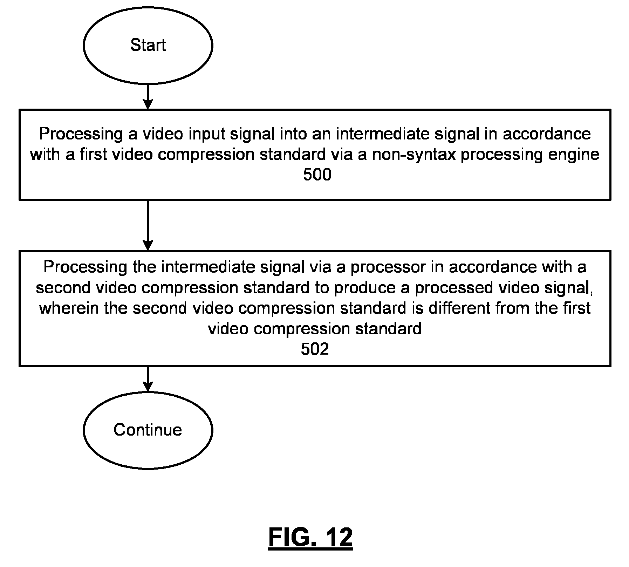

FIG. 12 presents a flowchart representation of a method in accordance with an embodiment of the present invention. In particular, a method is presented for use with one or more of the functions and features described in conjunction with FIGs. 1-11. In step 500, a video input signal is processed into an intermediate signal in accordance with a first video compression standard via a non-syntax processing engine. In step 502, the intermediate signal is processed via a processor in accordance with a second video compression standard to produce a processed video signal, wherein the second video compression standard is different from the first video compression standard.

In an embodiment of the present invention, step 500 can include transforming and quantizing, reordering and entropy encoding. The intermediate signals can include a plurality of motion vectors and a mode decision. The first and second video compression standards can include a motion picture expert group (MPEG) compression and a society of motion picture and television engineers (SMPTE) compression standard, or other digital video format.

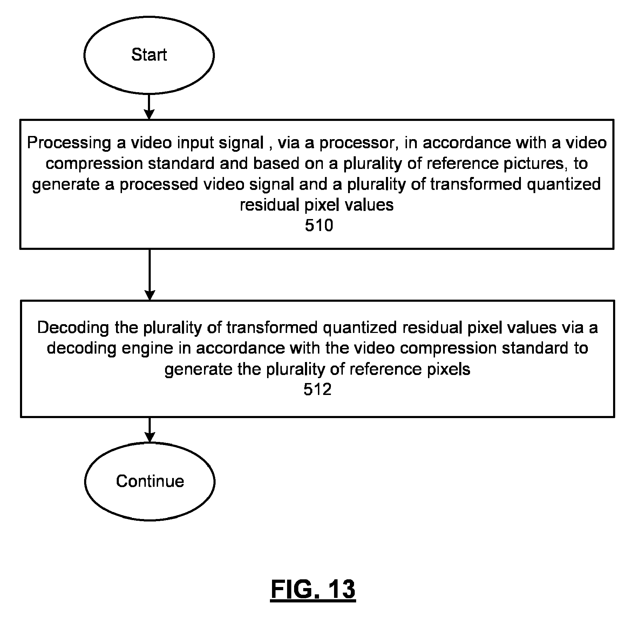

FIG. 13 presents a flowchart representation of a method in accordance with an embodiment of the present invention. In particular, a method is presented for use with one or more of the functions and features described in conjunction with FIGs. 1-12. In step 510, a video input signal is processed, via a processor, in accordance with a video compression standard and based on a plurality of reference pictures, to generate a processed video signal and a plurality of transformed quantized residual pixel values. In step 512, the plurality of transformed quantized residual pixel values are decoded via a decoding engine in accordance with the video compression standard to generate the plurality of reference pictures.

In an embodiment of the present invention, step 510 can include generating residual pixel values based on the video input signal and the plurality of reference pictures, transforming and quantizing the residual pixel values to generate the plurality of transformed quantized residual pixel values. Step 51 can further include reordering and entropy encoding the plurality of transformed quantized residual pixel values to generate the processed video signal.

In step 512, the decoding engine can inverse transform and inverse quantize the plurality of transformed quantized residual pixel values to generate reconstructed residual pixel values. The decoding engine can further motion compensate the reconstructed residual pixel values to generate the plurality of reference pictures.

The video compression standard can include a motion picture expert group (MPEG) compression, a society of motion picture and television engineers (SMPTE) compression standard, or other digital video format.

While particular combinations of various functions and features of the present invention have been expressly described herein, other combinations of these features and functions are possible that are not limited by the particular examples disclosed herein are expressly incorporated in within the scope of the present invention.

As one of ordinary skill in the art will appreciate, the term "substantially" or "approximately", as may be used herein, provides an industry-accepted tolerance to its corresponding term and/or relativity between items. Such an industry-accepted tolerance ranges from less than one percent to twenty percent and corresponds to, but is not limited to, component values, integrated circuit process variations, temperature variations, rise and fall times, and/or thermal noise. Such relativity between items ranges from a difference of a few percent to magnitude differences. As one of ordinary skill in the art will further appreciate, the term "coupled", as may be used herein, includes direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "coupled". As one of ordinary skill in the art will further appreciate, the term "compares favorably", as may be used herein, indicates that a comparison between two or more elements, items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As the term module is used in the description of the various embodiments of the present invention, a module includes a functional block that is implemented in hardware, software, and/or firmware that performs one or module functions such as the processing of an input signal to produce an output signal. As used herein, a module may contain submodules that themselves are modules.

Thus, there has been described herein an apparatus and method, as well as several embodiments including a preferred embodiment, for implementing a video processing device, and a video encoder for use therewith. Various embodiments of the present invention herein-described have features that distinguish the present invention from the prior art.

It will be apparent to those skilled in the art that the disclosed invention may be modified in numerous ways and may assume many embodiments other than the preferred forms specifically set out and described above. Accordingly, it is intended by the appended claims to cover all modifications of the invention which fall within the true spirit and scope of the invention.

## Claims

1. A video encoder (102, 402) comprising:
a non-syntax processing engine (150) that processes a video input signal (110) (110) into an intermediate signal (111) in accordance with a first video compression standard; and
a syntax section (175), coupled to the non-syntax processing engine (150), that transforms and quantizes the intermediate signal (111) in accordance with a second video compression standard to produce a processed video signal (112), wherein the second video compression standard is different from the first video compression standard.

2. The video encoder (102, 402) of claim 1 or 2, wherein the syntax section (175) includes a reordering module (216, 278).

3. The video encoder (102, 402) of claim 1 wherein the syntax section (175) includes an entropy encoding module (216, 280).

4. The video encoder (102, 402) of claim 1, 2 or 3, wherein the syntax section (175) includes a processor (200) for executing a plurality of operational instructions for implementing the operation of the syntax section (175).

5. The video encoder (102, 402) of any preceding claim, wherein the intermediate signals (111) include a plurality of motion vectors.

6. The video encoder (102, 402) of any preceding claim, wherein the intermediate signals (111) include a mode decision.

7. The video encoder (102, 402) of any preceding claim, wherein the first video compression standard is an motion picture expert group (MPEG) compression.

8. The video encoder (102, 402) as of claims 1 to 6, wherein the first video compression standard is a society of motion picture and television engineers (SMPTE) compression standard.

9. A method for use in a video encoder (102, 402), the method comprising:
processing (500) a video input signal (110) into an intermediate signal (111) in accordance with a first video compression standard via a non-syntax processing engine (150); and
processing (502) the intermediate signal (111) via a processor in accordance with a second video compression standard to produce a processed video signal (112), wherein the second video compression standard is different from the first video compression standard.

10. The video encoder (102, 402) of claim 9, wherein processing (510) the intermediate signals (111) includes transforming and quantizing.

11. The video encoder (102, 402) of claim 9 or 10, wherein processing the intermediate signals (111) includes reordering.

12. The video encoder (102, 402) of any of claims 9, 10 or 11, wherein processing the intermediate signals (111) includes entropy encoding.

13. The video encoder (102, 402) of any of claims 9 to 12 wherein the intermediate signals (111) include a plurality of motion vectors.

14. The video encoder (102, 402) of any of claims 9 to 13 wherein the intermediate signals (111) include a mode decision.

15. The video encoder (102, 402) of claim 9 wherein the first video compression standard is an motion picture expert group (MPEG) compression or a society of motion picture and television engineers (SMPTE) compression standard.
